# EUROPÄISCHE PATENTSCHRIFT

(11) **EP 0 559 943 B1**
(45) Veröffentlichungstag und Bekanntmachung des Hinweises auf die Patenterteilung: **03.01.1996**
(21) Anmeldenummer: 92104316.2
(22) Anmeldetag: 12.03.1992
(51) Int. Cl.: G01D 5/20, G01D 5/243

(54) **Wandler zum Erzeugen eines Ausgangssignals abhängig von der Lage eines Geberteils**
Converter with output of a position dependent signal
Capteur donnant un signal de position

(43) Veröffentlichungstag der Anmeldung: 15.09.1993
(73) Patentinhaber: SIEMENS AKTIENGESELLSCHAFT, D-80333 München (DE)
(72) Erfinder: Zimmer, Herbert, Dipl.-Ing., W-8400 Regensburg (DE)

(56) Entgegenhaltungen:
- FR-A- 2 316 796
- US-A- 3 777 255

## Beschreibung

### Wandler zum Erzeugen eines Ausgangssignals abhängig von der Lage eines Koppelelementes

Die Erfindung betrifft einen Wandler zum Erzeugen eines Ausgangssignals abhängig von der Lage eines Koppelelements relativ zu einem Abtastkopf, gemäß Oberbegriff von Anspruch 1.

Durch die US-PS 3 777 255 ist ein Positionssensor bekannt, bei dem ein scheibenförmiger Magnet als bewegbares Teil verwendet wird, der mit einem bewegbaren Objekt gekoppelt ist. Weiter steht der Magnet über ein magnetisches Feld parallel mit einem Abtastkopf in Verbindung, der u.a. einen Mantel und kreisförmige diesen verschließende Endteile aus ferromagnetischem Material aufweist. Dabei wird zur Messung des Abstandes zwischen einem der Endteile und dem Magneten die induzierte Spannung in einer Sekundärspule herangezogen. Die Anordnung weist jedoch keinen Mittelschenkel auf, durch den der magnetische Fluß gebündelt werden kann, um mit einem Koppelteil in Verbindung zu treten. Somit kann man insbesondere bei einer Drehbewegung des Koppelteils keine befriedigenden Meßergebnisse erzielen.

Ein Wandler nach dem Oberbegriff des Patentanspruchs 1 ist bekannt aus der US-PS 41 21 112 und dient - in Verbindung mit einem gezahnten Koppelelement - zur Erzeugung von Impulsen mit definiertem Abstand zu einem Bezugsimpuls. Mindestens ein Zahn des Koppelelements besteht dabei aus einer Materialkombination mit magnetischer und elektrischer Leitfähigkeit. Dadurch entsteht eine Differenzspannung, deren Phasenlage relativ zu der Speisespannung von den genannten Materialeigenschaften und von der Lage des Koppelelements relativ zu dem Abtastkopf abhängt. Dabei wird allerdings nur ausgewertet, ob sich ein Zahn oder eine Lücke des Koppelelements gegenüber dem Abtastkopf befindet. Der bekannte Geber ist dagegen nicht in der Lage, ein Ausgangssignal zu liefern, das ein genaues und reproduzierbares Maß für die Lage oder den Abstand des Koppelelements relativ zum Abtastkopf ist.

Der Erfindung liegt daher die Aufgabe zugrunde, diesen bekannten Wandler so weiterzubilden, daß sein Ausgangssignal ein genaues Maß für die Lage des Koppelelements relativ zu dem Abtastkopf ist; insbesondere muß gewährleistet sein, daß die Wandlerkurven (das Ausgangssignal als Funktion der Lage) sämtlicher Wandler desselben Typs in einem engen, typspezifischen Toleranzband liegen, und zwar bei allen Betriebstemperaturen und unabhängig von der Fertigungscharge, aus der das Material der Wandler stammt. Es hat sich gezeigt, daß gerade die letztgenannte Forderung nicht einzuhalten ist, wenn man das Koppelelement - wie aus vorgenannter US-PS bekannt - aus einem Material mit elektrischer und magnetischer Leitfähigkeit fertigt.

Es ist nämlich praktisch nicht möglich, die Eigenschaften solcher Werkstoffe, die aus unterschiedlichen Chargen (Fertigungseinheiten) stammen, in ausreichend engen Grenzen zu halten.

Die erfindungsgemäße Lösung dieser Aufgabe ist bei einem Wandler gemäß Oberbegriff von Anspruch 1 durch die im Kennzeichen dieses Anspruchs angegebenen Merkmale definiert.

Die Erfindung beruht auf der Einsicht, daß sich die beiden Funktionen, die in dem bekannten Fall mit der elektrischen und der magnetischen Leitfähigkeit des Koppelelements verbunden sind, trennen lassen und daß sich Werkstoffe mit überwiegend elektrischer oder überwiegend magnetischer Leitfähigkeit mit dem gewünschten Temperaturgang sowie mit der erforderlichen Präzision und Langzeitstabilität produzieren lassen, auch wenn sie aus unterschiedlichen Chargen stammen.

Insbesondere enthält das Koppelelement ein Koppelteil aus einem Material dessen elektrische Leitfähigkeit im Vergleich zur magnetischen Leitfähigkeit vernachlässigbar gering ist und dessen Abstand von dem Abtastkopf die Größe der Spannung an der Sekundärwicklung und damit die Phasenlage der Differenzspannung und die Größe des Ausgangssignals bestimmt.

Die für das Funktionsprinzip des Wandlers notwendige Phasenverschiebung zwischen der Speisespannung und der Spannung an der Sekundärwicklung wird - im Gegensatz zum Stand der Technik - aus dem Koppelelement heraus in den Abtastkopf verlagert: Eine Möglichkeit besteht dabei darin, um den Mittelschenkel eine Kurzschlußwicklung oder eine Hilfswicklung zu legen, die einen ohmschen Widerstand speist. Bei der in Betracht genommenen relativ hohen Frequenz von 150 kHz der Speisequelle ist es jedoch am einfachsten und am wirksamsten als Last eine Scheibe mit guter elektrischer und praktisch fehlender magnetischer Leitfähigkeit zu verwenden, deren Dicke kleiner als die Eindringtiefe ist. Über die mechanischen Abmessungen und die genau reproduzierbare elektrische Leitfähgkeit dieser Scheibe läßt sich die dadurch verursachte Phasenverschiebung zwischen den Wechselspannungen an den Wicklungen in engen Grenzen halten. Andererseits kann der Koppelfluß durch den Mittelschenkel durch die Scheibe hindurchtreten und so durch das Koppelelement verändert werden.

Diese Veränderung beruht auf einer Änderung des gesamten magnetischen Widerstandes des Koppelelementes und des Luftspaltes zwischen diesem und dem Abtastkopf bei einer Veränderung der Lage des Koppelelementes relativ zu dem Abtastkopf. Diese Modulation des Koppelflusses zwischen Primär- und Sekundärwicklung kann dabei nicht nur mit Hilfe eines Koppelteiles aus einem magnetisch leitfähigen Material (Reduzierung des Widerstandes), sondern auch mit Hilfe von mindestens einem Entkoppelteil aus einem magnetisch nicht leitendem Material (Erhöhung des Magnetwiderstandes) erreicht werden.

Vorzugsweise besteht das Koppelelement aus einer Kombination von mindestens einem Koppel- und einem Entkoppelteil, wobei sich die Abstände zwischen diesen Teilen und dem Mittelschenkel des Schalenkerns abhängig von der Lage des Koppelelementes relativ zu dem Abtastkopf ändern. Die Änderung des Ausgangssignals mit einer vorgegebenen Lageänderung zwischen Abtastkopf und Koppelelement ist dabei besonders groß, wenn sich die Wirksamkeit von Koppelteil und Entkoppelteilen (der Abstand dieser Teile zu dem Mittelschenkel) mit der Lage gegensinnig ändern: Dann ergibt sich in der einen Endposition ein extrem kleiner Koppelfluß, bestimmt in erster Linie durch die Endkoppelteile, und in der anderen Endlage ein extrem großer Koppelfluß, bestimmt im wesentlichen nur durch die hohe magnetische Leitfähigkeit des Koppelteils.

Die Erfindung wird anhand der Figuren näher erläutert; es zeigen:
Figur 1 ein Ausführungsbeispiel der Erfindung, und zwar gesehen entlang der Schnittlinie I-I in Figur 2;
Figur 2 einen Schnitt durch das Ausführungsbeispiel nach Figur 1 entlang Linie II-II;
Figur 3 das Schaltbild eines Ausführungsbeispiels der Erfindung;
Figur 4 ein vereinfachtes Ersatzschaltbild zu Figur 3; und
Figur 5 ein Zeigerdiagramm zu dem Ersatzschaltbild nach Figur 4.

Ein Abtastkopf 1 weist einen topfförmigen Schalenkern 11 mit einem Mantel 111 auf, der koaxial um einen Mittelschenkel 112 und eine gemeinsame Mittelachse 100 angeordnet ist. Der Mittelschenkel 112 trägt eine Sekundärwicklung 122 und der Mantel 111 eine Primärwicklung 121.

Der Schalenkern 11 aus Ferritmaterial ist mit einer Scheibe 130 abgedeckt, die auf den freien Stirnseiten von Mantel 111 und Mittelschenkel 112 aufliegt, und so - z.B. durch Festklemmen oder Kleben - befestigt ist. Diese Scheibe besteht aus einem Material, z.B. Manganinblech, das elektrisch leitfähig ist, aber praktisch keine magnetische Permeabilität, aufweist. Die Dicke D1, z.B. 0,1 mm, ist dabei kleiner als die Eindringtiefe bei der Frequenz der Speisespannung (150 kHz) gewählt. Dementsprechend werden einerseits in der Scheibe Wirbelströme induziert, die als Last wirken, andererseits können die von dem Mittelschenkel ausgehenden magnetischen Feldlinien diese Scheibe durchsetzen.

Das Koppelelement 2 besteht aus einem Koppelteil 20 aus einem Material (z.B. Ferrit, Tranformatorenblech), dessen magnetische Leitfähigkeit sehr groß ist im Vergleich zur elektrischen Leitfähigkeit. Dieses Koppelteil 20 ist zwischen zwei Entkoppelteilen 21, 22 aus einem magnetisch nicht leitenden und elektrisch leitenden Material (z.B. Alu, Kupfer) angeordnet; die Erstreckung dieser Entkoppelteile in Richtung der Mittelachse 100 (parallel zu den Feldlinien aus dem Mittelschenkel) ist dabei groß im Vergleich zu der Eindringtiefe, so daß sich in diesem Bereich ein hoher magnetischer Widerstand für den Koppelfluß ergibt. Die Gesamtdicke des Koppelelementes 2 ist geringfügig größer als der Durchmesser des Abtastkopfes 1.

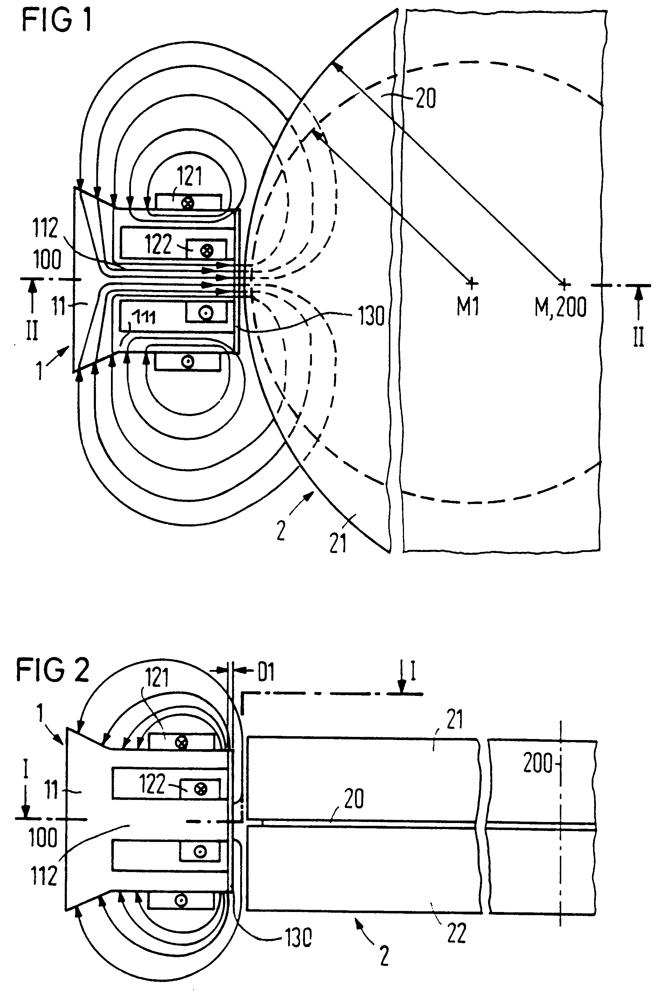

Das Koppelelement 2 ist z.B. mit dem Gaspedal eines Kraftfahrzeuges gekoppelt und drehbar um eine Achse 200 angeordnet, die rechtwinklig zu der Achse 100 des Abtastkopfes steht. Die Entkoppelteile 21, 22 haben dabei zumindest in dem ausgenutzten Drehbereich eine kreisförmige Kontur mit Mittelpunkt M in der Achse 200. Das Koppelteil 20 hat in dem ausgenutzten Drehbereich ebenfalls kreisförmige Kontur; der Mittelpunkt M1 ihres Radius ist dagegen gegenüber der Achse 200 versetzt, so daß der Luftspalt zwischen der Stirnseite des Koppelteils 20 und dem Mittelschenkl 112 bei Drehung des Koppelelementes 2 in Pfeilrichtung in Figur 1 stetig zunimmt. Dementsprechend sinkt mit dem Drehwinkel die Sekundärspannung, womit sich auch die Phase ϕ zwischen der resultierenden Differenzspannung und der Speisespannung entsprechend ändert. Der Verlauf der Luftspalte abhängig vom Drehwinkel bestimmt den Verlauf des Ausgangssignales: Durch einfaches Ändern der Kontur von Koppelteil 20 und Entkoppelteilen 21, 22 läßt sich praktisch jeder gewünschte Kurvenverlauf erreichen.

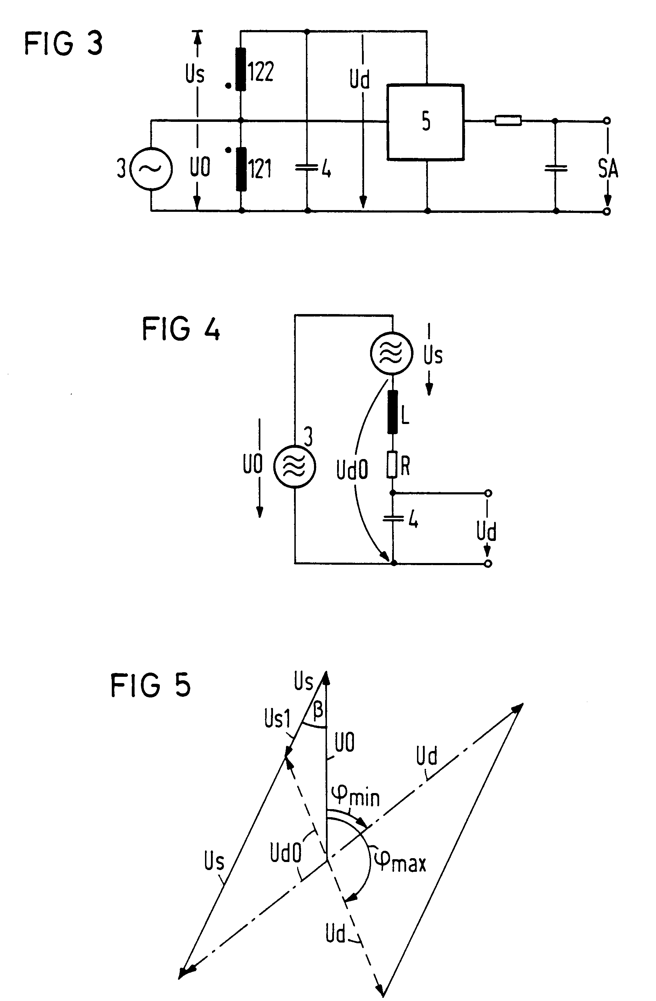

Figur 3 zeigt, wie die Primärwicklung 121 und die Sekundärwicklung 122 gegensinnig in Reihe geschaltet sind und die Speisespannung U0 einerseits und die Differenzspannung Ud aus Speisespannung U0 und Sekundärspannung Us an der Sekundärwicklung 122 einem Phasendetektor 5 zugeführt werden. Dieser Phasendetektor liefert an seinem Ausgang beispielsweise ein Signal konstanter Höhe solange Ud und U0 gleichzeitig vorhanden sind. Die resultierende Ausgangsspannung wird dann über ein RC-Glied geglättet und ergibt so das Ausgangssignal SA, dessen Größe ein Maß für die Phasendifferenz und damit für den Drehwinkel der Geberplatte 20 ist.

Aus dem Zeigerdiagramm der Figur 5 ist unter Zuhilfenahme der Ersatzschaltung von Figur 4 zu sehen, daß die Sekundärspannung Us einen konstanten Winkel β mit der konstanten Speisespannung U0 einschließt. Die Größe dieses Winkels hängt ausschließlich von der elektrischen Leitfähigkeit und den Abmessungen der Scheibe 130 ab; da sich bei der Leitfähigkeit und den Abmessungen sehr kleine Toleranzen einhalten lassen, ist dieser Phasenwinkel β praktisch eine Konstante.

Die Größe der Sekundärspannung Us ist vom Abstand des Koppelteiles 20 und der Entkoppelteile 21, 22 von dem Schalenkern 11 abhängig und zwischen einem Minimalwert Us1 - bei größtem Abstand von 20 und kleinstem Abstand von 21, 22 - und einem Maximalwert bei umgekehrten Verhältnissen variabel, wobei jedoch der Winkel β konstant bleibt. Mit der lageabhängigen Änderung der Sekundärspannung Us ändert sich entsprechend auch die Differenzspannung Ud0 im Leerlauffall und damit der Phasenwinkel zwischen dieser Differenzspannung und der Leerlauf spannung U0 in einem großen Bereich. Das gleiche gilt für die Spannung an dem Kondensator 4 (Zeiger Ud). Der Kondensator ist vorzugsweise so bemessen, daß die Resonanzfrequenz aus Kondensator 4 und induktivem Innenwiderstand des Gebers (vgl. L in Figur 4) mindestens 20 % unter der Betriebsfrequenz (150 kHz) liegt. Diese Komponenten bilden dann einen induktiven Tiefpaß, der hochfrequente Störspannungen kurzschließt.

Figur 5 zeigt, daß sich die Phasendifferenz zwischen der Differenzspannung Ud und der Speisespannung U0 beim Drehen des Koppelelements 2 zwischen einem Minimalwert ϕmin und einem Maximalwert ϕmax ändert. Dieser Phasenwinkel ist somit ein Maß für die relative Lage zwischen dem Koppelelement 2 und dem Abtastkopf 1.

Figur 5 zeigt, daß auch die Größe der Sekundärspannung Us ein Maß für die relative Lage zwischen Abtastkopf und Koppelelement ist. Die Auswertung dieser Amplitude ist jedoch störanfälliger als die Auswertung der Phasendifferenz.

Das Koppelelement kann abweichend von dem in den Figuren 1, 2 dargestellten Beispiel auch so geführt sein, daß es eine geradlinige Bewegung quer oder parallel zur Achse 100 des Abtastkopfes 1 ausführt. Im letzteren Fall kann man auch mit konstantem Luftspalt arbeiten und den magnetischen Widerstand für den Koppelfluß abhängig von der Position durch unterschiedlichen Querschnitt von Koppelteil und Entkoppelteilen ändern.

## Patentansprüche

1. Wandler zum Erzeugen eines Ausgangssignals (SA) abhängig von der Lage eines Koppelelementes (2) relativ zu einem Abtastkopf (1),
-- wobei der Abtastkopf (1) aufweist:
- einen Schalenkern (11) aus Magnetwerkstoff mit einem topfförmigen Mantel (111), der einen Mittelschenkel (112) konzentrisch umgibt;
- eine Primärwicklung (121),die außen um den Mantel (111) gewickelt und an eine Speisequelle (3) angeschlossen ist, die eine mittelfrequente Speisespannung (U0) konstanter Frequenz und Amplitude liefert;
- eine Sekundärwicklung (122), die um den Mittelschenkel (112) gewickelt ist;
-- wobei die Primärwicklung (121) und die Sekundärwicklung (122) gegensinnig in Reihe geschaltet sind und die Wechselspannungen an diesen Wicklungen eine Differenzspannung (Ud) bilden, deren Phasenlage (ϕ) relativ zu der Speisespannung (U0) das Ausgangssignal (SA) bestimmt,
**dadurch gekennzeichnet**, daß eine Scheibe (130) mit konstanten, genau reproduzierbaren Materialeigenschaften mit dem magnetischen Fluß durch den Mittelschenkel (112) gekoppelt ist, wobei die Dicke (D1) der Scheibe (130) kleiner ist als die Eindringtiefe.

2. Wandler nach Patentanspruch 1,
**dadurch gekennzeichnet**, daß die Scheibe (130) auf den freien Enden von Mantel (111) und Mittelschenkel (112) angeordnet ist.

3. Wandler nach Patentanspruch 1,
**dadurch gekennzeichnet**, daß das Koppelelement (2)
-- mindestens ein Koppelteil (20) aus einem Material aufweist, dessen magnetische Leitfähigkeit groß ist im Vergleich zur elektrischen Leitfähigkeit,
-- mindestens ein Entkoppelteil (21, 22) aufweist, dessen elektrische Leitfähigkeit groß ist im Vergleich zur magnetischen,
daß diese Teile (20, 21, 22) scheiben- oder plattenförmig ausgebildet sind und
-- sich parallel zu einer Querschnittsebene durch die Mittelachse (100) des Abtastkopfes (1) erstrecken, wobei diese Erstreckung bei dem Entkoppelteil (21, 22) groß ist im Vergleich zur Eindringtiefe, und
-- deren Stirnseiten dem Mittelschenkel des Schalenkerns (11) gegenüber liegen und einen Abstand davon haben, der von der Lage des Koppelteiles (20) relativ zu dem Abtastkopf (1) abhängt.

4. Wandler nach Patentanspruch 3,
**dadurch gekennzeichnet**, daß das Koppelelement (2) um eine Achse (200) drehbar ist, die quer zu der Mittelachse (100) durch den Mittelschenkel (112) des Abtastkopfes (1) verläuft.

5. Wandler nach Patentanspruch 4,
**dadurch gekennzeichnet**, daß zumindest im Bereich des aus dem Mittelschenkel (112) austretenden Magnetfeldes zu beiden Seiten des Koppelteiles (20) je ein Entkopplungsteil (21,22) angeordnet ist.

6. Wandler nach Patentanspruch 5,
**dadurch gekennzeichnet**, daß die Entkopplungsteile (21, 22) fest mit dem Koppelteil (20) verbunden sind.

7. Wandler nach Patentanspruch 6,
**dadurch gekennzeichnet**, daß der Abstand der dem Abtastkopf (1) zugewandten Stirnseiten von Koppelteil (20) und Entkopplungsteilen (21, 22) eine unterschiedliche Funktion der Lage des Koppelelementes (2) relativ zu dem Abtastkopf (1) ist.

8. Wandler nach Patentanspruch 1,
**dadurch gekennzeichnet**, daß parallel zu der Reihenschaltung der Wicklungen (121,122) ein Kondensator (4) mit solcher Bemessung liegt, daß er für hochfrequente Störspannungen einen Kurzschluß darstellt.

## Claims

1. Converter for generating an output signal (SA) as a function of the position of a coupling element (2) relative to a sensing head (1),
-- the sensing head (1) having:
- a pot-type core (11) made of magnetic material and having a pot shell (111) which concentrically surrounds a centre limb (112);
- a primary winding (121) which is wound around the outside of the shell (111) and is connected to a supply source (3) which supplies a mediumfrequency supply voltage (U0) having a constant frequency and amplitude;
- a secondary winding (122) which is wound around the centre limb (112);
-- the primary winding (121) and the secondary winding (122) being connected in series in opposite senses and the alternating voltages across these windings forming a differential voltage (Ud) whose phase angle (φ) relative to the supply voltage (U0) determines the output signal (SA),
characterized in that a disk (130) having constant, exactly reproduceable material properties is coupled to the magnetic flux through the centre limb (112), the thickness (D1) of the disk (130) being smaller than the penetration depth.

2. Converter according to Patent Claim 1,
characterized in that the disk (130) is arranged on the free ends of the shell (111) and the centre limb (112).

3. Converter according to Patent Claim 1,
characterized
in that the coupling element (2)
-- has at least one coupling part (20) made of a material whose permeability is large in comparison with the electrical conductivity,
-- has at least one decoupling part (21, 22) whose electrical conductivity is large in comparison with the permeability,
in that these parts (20, 21, 22) are constructed in the form of disks or plates and
-- extend parallel to a cross-sectional plane through the centre axis (100) of the sensing head (1), this extent being large in comparison with the penetration depth in the case of the decoupling part (21, 22), and
-- the ends of these parts (20, 21, 22) are situated opposite the centre limb of the pot-type core (11) and are at a distance therefrom which depends on the position of the coupling part (20) relative to the sensing head (1).

4. Converter according to Patent Claim 3,
characterized
in that the coupling element (2) can be rotated about an axis (200) which runs transversely with respect to the centre axis (100) through the centre limb (112) of the sensing head (1).

5. Converter according to Patent Claim 4,
characterized in that in each case one decoupling part (21, 22) is arranged on both sides of the coupling part (20), at least in the region of the magnetic field issuing from the centre limb (112).

6. Converter according to Patent Claim 5,
characterized in that the decoupling parts (21, 22) are permanently connected to the coupling part (20).

7. Converter according to Patent Claim 6,
characterized in that the distance of the ends, facing the sensing head (1), of the coupling part (20) and of the decoupling part (21, 22) is a variable function of the position of the coupling element (2) relative to the sensing head (1).

8. Converter according to Patent Claim 1,
characterized in that a capacitor (4) is connected in parallel with the series circuit of the windings (121, 122) and has such a rating that it represents a short-circuit for radiofrequency interference voltages.

## Revendications

1. Transducteur pour produire un signal de sortie (SA) en fonction de la position d'un élément de couplage (2) par rapport à une tête d'exploration (1),
-- dans lequel la tête d'exploration (1) comprend :
- un noyau (11) en forme de coupelle en matériau magnétique comportant une paroi en forme de coupelle (111), qui entoure concentriquement une branche médiane (112);
- un enroulement primaire (121), qui est enroulé extérieurement sur la paroi (111) et est raccordé à une source d'alimentation (3) qui délivre une tension d'alimentation (UO) à moyenne fréquence de fréquence et d'amplitude constantes;
- un enroulement secondaire (122), qui est enroulé autour de la branche médiane (112);
-- et dans lequel l'enroulement primaire (121) et l'enroulement secondaire (122) sont branchés en série en des sens opposés et les tensions alternatives appliquées à ces enroulements forment une tension différentielle (Ud), dont la phase (ϕ) par rapport à la tension d'alimentation (UO) détermine le signal de sortie (SA), caractérisé en ce
qu'un disque (130) avec des caractéristiques de matériau constantes et reproductibles de façon précise est couplé au flux magnétique par la branche médiane (112), l'épaisseur (D1) du disque (130) étant inférieure à la profondeur de pénétration.

2. Transducteur selon la revendication 1, caractérisé en ce que le disque (130) est disposé sur la tranche libre de la paroi (111) et la face d'extrémité de la branche médiane (112).

3. Transducteur selon la revendication 1, caractérisé en ce que l'élément de couplage (2)
-- comporte au moins une pièce de couplage (20) formée d'un matériau dont la conductibilité magnétique est élevée par rapport à la conductibilité électrique,
-- au moins une pièce de découplage (21,22), dont la conductibilité électrique est élevée par rapport à la conductibilité magnétique, en ce que ces pièces (20,21,22) sont réalisées en forme de disques ou de plaques, et
-- s'étendent parallèlement à un plan de coupe transversal passant par l'axe médian (100) de la tête d'exploration (1), cette disposition en parallèle dans le cas de la pièce de découplage (21,22) s'étendant sur une longueur importante par rapport à la profondeur de pénétration, et
-- ont leurs faces frontales situées en vis-à-vis de la branche médiane du noyau formant coupelle (11) et séparées de celles-ci par une distance qui dépend de la position de la pièce de couplage (20) par rapport à la tête d'exploration (1).

4. Transducteur selon la revendication 3, caractérisé en ce que l'élément de couplage (2) peut pivoter autour d'un axe (200), qui s'étend transversalement par rapport à l'axe médian (100) passant par la branche médiane (112) de la tête d'exploration (1).

5. Transducteur selon la revendication 4, caractérisé en ce que respectivement une pièce de découplage (20) est associée à une pièce de découplage (21,22), au moins dans la zone du champ magnétique sortant de la branche médiane (112), des deux côtés de la pièce de couplage (20).

6. Transducteur selon la revendication 5, caractérisé en ce que les pièces de découplage (21,22) sont solidaires de la pièce de couplage (20).

7. Transducteur selon la revendication 6, caractérisé en ce que la distance entre les faces frontales, tournées vers la tête d'exploration (1) de la pièce de couplage (20) et des pièces de découplage (21,22) est une fonction différente de la position de l'élément de couplage (2) par rapport à la tête d'exploration (1).

8. Transducteur selon la revendication 1, caractérisé en ce qu'en parallèle avec le montage série des enroulements (121,122) est disposé un condensateur (4) dont la valeur est choisie telle qu'il représente un court-circuit pour des tensions parasites à haute fréquence.
